# EUROPÄISCHE PATENTSCHRIFT

(11) **EP 0 671 128 B1**
(45) Veröffentlichungstag und Bekanntmachung des Hinweises auf die Patenterteilung: **12.06.1996**
(21) Anmeldenummer: 93114822.5
(22) Anmeldetag: 15.09.1993
(51) Int. Cl.: A23L 2/64, A23L 3/02, A23L 2/46

(54) **Verfahren zum Haltbarmachen von Aromen enthaltenden Lebensmitteln, insbesondere von Getränken**
Process for preserving flavour containing foodstuffs especially beverages
Procédé de conservation de produits alimentaires, en particulier de boissons, contenant des arômes

(43) Veröffentlichungstag der Anmeldung: 13.09.1995
(73) Patentinhaber: Amecke Fruchtsaft GmbH & Co. KG, D-58706 Menden (DE)
(72) Erfinder: Amecke-Mönnighof, Heinrich, D-58706 Menden (DE); Szczecinski, Hans-Joachim, Dr., D-58706 Menden (DE)
(74) Vertreter: Schubert, Siegmar, Dipl.-Ing.

(56) Entgegenhaltungen:
- EP-A- 0 082 460
- EP-A- 0 095 202
- EP-A- 0 136 793
- EP-A- 0 447 760
- CA-A- 1 199 215

## Beschreibung

Die Erfindung betrifft ein Verfahren zum Haltbarmachen von Aromen enthaltenden Lebensmitteln, insbesondere von Getränken.

Aromen behören zu den empfindlichsten Bestandteilen von Lebensmitteln bei der Verarbeitung und der Verpackung. Aromen sind insbesondere temperaturempfindlich. Bei üblicherweise verwendeten Methoden von Haltbarmachung (Pasteurisation, Aseptik, Autoklavieren) wird für die Abtötung von Verderbnis verursachenden Mikroorganismen soviel Wärmeenergie (Temperatur >60°C bei entsprechender Zeit) benötigt, daß die Aromamoleküle sich chemisch verändern, insbesondere diejenigen, die für den ursprünglichen frischen Geruch und Geschmack des noch unbehandelten Rohprodukts verantwortlich sind.

Üblicherweise werden Lebensmittel mit den folgenden Verfahren haltbar gemacht:
- Pasteurisation von Produkt und darin flüssig eingebrachtem Aroma bzw. zusammen mit dem zuvor nicht abgetrennten Aroma,
- Autoklavierung mit zuvor in die Verpackung bzw. Produkt eingebrachtem oder darin enthaltenem Aroma,
- aseptischer Haltbarmachung (Hochkurzzeiterhitzung), d.h. kalte Befüllung mit gekühltem Produkt in eine zuvor sterilisierte Verpackung unter aseptischen Bedingungen bei kalter Aromaführung zum Produkt nach Hochkurzzeiterhitzung des Produkts (= Lebensmittel) oder vor dessen Hochkurzzeiterhitzung.

Die konventionelle Pasteurisation und Autoklavierung haben den Nachteil, daß das Aroma als Bestandteil des Produktes thermisch geschädigt wird, da es nicht getrennt vom Produkt kaltsteril geführt wird.

Die Aseptik erlaubt eine solche getrennte kaltaseptische Führung. Vor kurzem wurde sie bei neuesten Maschinen erstmals verwirklicht.

Die Aseptik bringt jedoch gravierende Verfahrensrisiken:
- in der Phase nach der Kurzzeiterhitzung bis zum Verschließen nimmt das Produkt bei Luftkontakt kritische Mengen Sauerstoff auf, die das Produkt durch Oxydation der Aromen, Vitamine und Produktfarbe schädigen.
- das Risiko, die Verkeimung vor allem des Packmittels nicht restlos beseitigt zu haben, ist entschieden höher als bei der Pasteurisation, mit der Folge von Kundenreklamationen über verdorbene Lebensmittel bzw. über gärig unter Druck gesetzte Verpackungen.

Die EP-A-0 082 460 beschreibt ein Verfahren zur Herstellung von Aromakapseln, wobei eine wäßrige, körnige Aromazubereitung in gefrorenem Zustand mit Proteinen und/oder Kohlehydraten beschichtet wird. Die so gewonnenen Aromakapseln werden zunächst kalten oder heißen Getränken, z.B. Wasser, beigefügt. Im wesentlichen beschreibt diese Druckschrift also die Merkmale des Oberbegriffs von Patentanspruch 1.

Die EP-A-0 095 202 beschreibt das Haltbarmachen von Getränken durch Erhitzen, wobei Aromasubstanzen getrennt sterilisiert werden. Kaltes, flüssiges Aroma wird hierzu separat steril filtriert und dem pasteurisierten, kalten Saft zugegeben. Die für das haltbargemachte Getränk vorgesehene Verpackung wird vorher chemisch entkeimt und dann kalt mit dem Saft befüllt.

Die vorliegende Erfindung vermeidet die beschriebenen Nachteile des Standes der Technik. Ihr liegt die Aufgabe zugrunde, ein Verfahren zum Haltbarmachen von Aromen enthaltenden Lebensmitteln, insbesondere von Getränken, vorzuschlagen, bei dem die Aromen keinerlei schädlichen Temperaturen ausgesetzt werden, ohne daß die Haltbarmachung des betreffenden Lebensmittels darunter leidet.

Die Lösung dieser Aufgabe gelingt durch die Maßnahmen von Patentanspruch 1.

Das erfindungsgemäße Verfahren dient dazu, die Aromen von Lebensmitteln, soweit diese mittels Temperatureinwirkung haltbar gemacht werden, ohne Temperaturschäden kaltsteril in das mittels Temperatureinwirkung haltbar gemachte Produkt einzubringen. Es verbindet die Sicherheit des nichtaseptischen thermischen Verfahrens mit dem Vorteil kaltaseptischer Aromaführung ohne thermische Schädigung.

Der Kern der erfindungsgemäßen Verfahrensführung besteht somit in folgendem: Das Lebensmittel wird zur Haltbarmachung erhitzt. Solange die Verpackung noch nicht verschlossen ist, wird die richtige Menge Aroma in gefrorenem Zustand als stückiger Körper, umgeben von einer wärmeisolierenden Schicht aus produkteigenen Bestandteilen, zu dem Produkt hinzugefügt. Nach dem Verschließen der Verpackung und nach Abschluß der Temperatureinwirkung kühlt das Produkt zurück auf Raumtemperatur bzw. Lagertemperatur. Die Stärke und Zusammensetzung der isolierenden Schicht aus produkteigenen Bestandteilen ist in Verbindung mit der Kältetemperatur so bemessen, daß die Zeit zur Aufschmelzung der isolierenden Schicht reicht, bis das Produkt die aromagefährdende Temperatur sicher unterschritten hat. Vor der Einbringung des Aromas wird das Aroma kalt sterilisiert (EK-Filtration) und mit dem isolierenden Material nach Gefrierung ummantelt.

Im Ergebnis liegt nun ein sicher steriles Produkt vor, ohne nachteilige Einwirkung der Temperatur auf das Aroma.

Die Erfindung wird im folgenden anhand eines Ausführungsbeispieles näher erläutert, aus dem sich weitere wichtige Merkmale ergeben, wobei zunächst die erfindungsgemäße Verfahrensführung allgemein erläutert wird.

Die leicht flüchtigen Aromen, die den qualitätsbestimmenden Frischecharakter des Produktes bewerkstelligen, nehmen <2 ‰ Volumen in Anspruch.

Das Produkt selbst - Getränke, Fruchtzubereitungen, Sirupe, Konzentrate oder auch andere Lebensmittel - wird konventionell heiß in seine Verpackung verbracht, z.B. in Flaschen gefüllt. Normalerweise wird die Verpackung anschließend verschlossen, zusammen mit dem Produkt, und auf Raumtemperatur zurückgekühlt. In dieser Phase erhält das Aroma üblicherweise seine Hitzeschäden.

Nach dem erfindungsgemäßen Verfahren wird das zuvor vom Rohmaterial getrennte Aroma auf ca. -5 bis -100°C gekühlt, in aller Regel auf -40°C, und zwar in der jeweils für eine Verbraucherverpackung benötigten portionierten Menge, in einem oder mehreren Stücken.

Die Aromen werden unmittelbar vor der Tiefkühlung bis mindestens zum Wechsel von der flüssigen in die feste Phase durch Mikrofiltration keimfrei gemacht.

Diese gefrorenen bzw. teifgefrorenen Aromaportionen werden als feste Stücke anschließend von temperaturisolierendem Material ummantelt. Das isolierende Material ist in aller Regel ein Bestandteil des Lebensmittels bzw. eines der Rohmaterialien oder Halbwaren und zum Verzehr geeignet.

Das isolierende Material wird mittels einer geeigneten Methode keimfrei gemacht, z.B. durch Temperatureinwirkung bei anschließender Rückkühlung. Die Wahl der Methode richtet sich in erster Linie nach dem Ziel, keine negativen Geschmacksveränderungen zu verursachen.

Das isolierende Material wird derart um jede Aromaportion verbracht, daß das umschlossene Aroma gegen Temperatureinwirkung von außen wirksam geschützt ist. Der Schutz ist abhängig von der Stärke des isolierenden Materials. Die Stärke des isolierenden Materials richtet sich nach der Zeit, die das Produkt bis Rückkühlung unter das die Aromen gefährdende Temperaturniveau benögtigt.

Nachdem die Verpackung mit Produkt befüllt wurde, wird nun dies gefrorene Aroma, umgeben von der ebenfalls kalten Isolierschicht, in die Verpackung verbracht werden, oder direkt in den Produktstrom, der für eine einzelne Verpackung portioniert wird.

Das Produkt ist heiß (z.B. bei der Pasteurisation) oder kalt (z.B. bei der Autoklavierung), wenn es mit dem gefrorenem Aromastück erstmalig in Kontakt kommt.

Die Aromakugel (Aromaportion) ist keimfrei bis auf die äußere Oberfläche, die keimfrei gemacht wird von dem heißen bzw. zu erhitzenden Produkt.

Die isolierende Materialschicht löst sich während der Temperatureinwirkung zur Haltbarmachung des Produktes auf. Die isolierende Schicht des isolierenden Materials ist in ihrer Stärke so gewählt, daß sie bis zum Erreichen des aromaschonenden Temperaturniveaus bei der Rückkühlung, das Aromastück vor der Verflüssigung schützt. Erst nach Unterschreiten der kritischen Temperatur (ca. 45°C) löst sich die isolierende Schicht, wird zum Bestandteil des Produktes und gibt das bis dahin gefrorene Aroma mit dessen Schmelzen an das Produkt frei. Das Aroma vermischt sich mit dem Produkt oder bleibt auf dessen Oberfläche.

Das Produkt wurde konventionell keimfrei haltbar gemacht. Das Aroma wurde getrennt durch eine kaltsterile Filtration haltbar gemacht. Das isolierende Material wurde durch eine geeignete Methode, z.B. Temperatureinwirkung, keimfrei gehalten. Die Oberfläche des isolierenden Aromastücks, die mit Luft vor Verschließen der Verpackung in Kontakt kommt, wird durch das erhitzte umgebende Produkt bzw. erhitzte produktumgebende Medium keimfrei gehalten. So gelangt steriles nicht temperaturbelastetes Aroma in ein durch Temperatureinwirkung haltbar gemachtes Produkt.

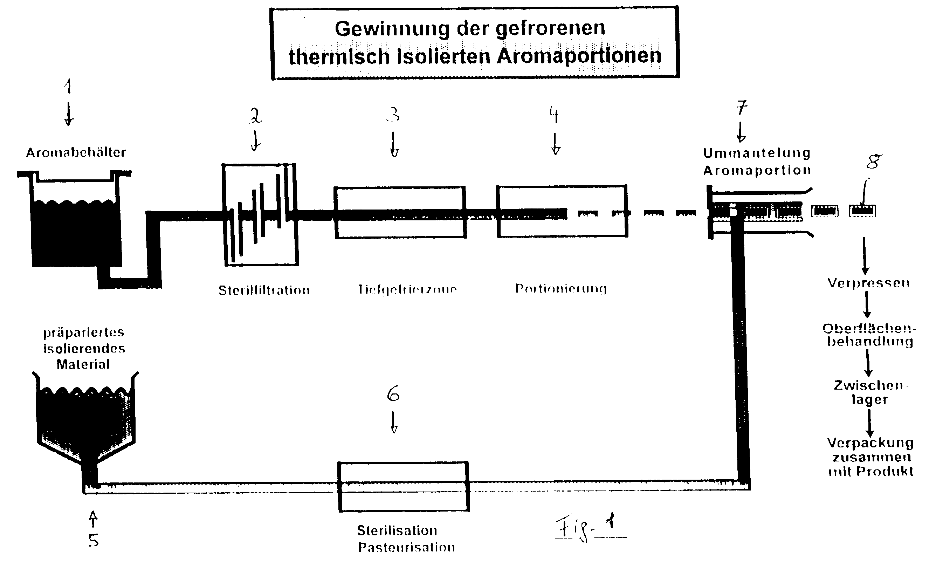

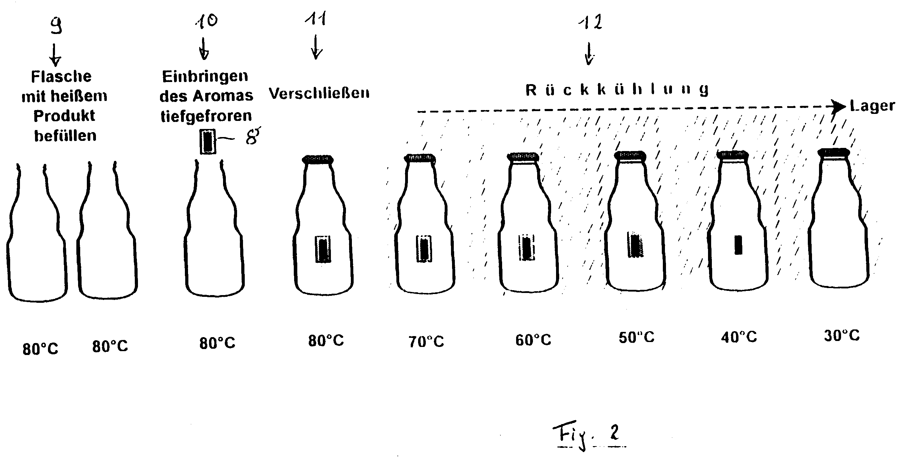

Im folgenden wird die Erfindung anhand der beigefügten Zeichnung näher erläutert, wobei in Fig. 1 die Gewinnung der gefrorenen, thermisch isolierten Aromaportionen erläutert wird und in Fig. 2 deren Einbringen in eine mit dem sterilisierten Produkt gefüllten Behälter.

Allgemein sei gesagt, daß die Erfindung im folgenden anhand des Beispieles des Haltbarmachens von Getränken erläutert wird.

In Fig. 1 ist ein Aromabehälter 1 gezeigt, der mit einem Aroma gefüllt ist, das zuvor von dem Rohmaterial des betreffenden Getränks abgetrennt worden ist. Das Aroma wird bei Pos. 2 einer Sterilfiltration unterworfen, anschließend in einer Zone 3 tiefgefroren und schließlich in einer Station 4 portioniert.

Präpariertes isolierendes Material liegt in einem weiteren Behälter 5 vor und wird anschließend in einer Station 6 durch Pasteurisieren sterilisiert.

In einer Station 7 werden die Aromaportionen mit dem isolierenden Material ummantelt, so daß ummantelte Aromaportionen 8 entstehen.

Diese werden anschließend ggf. verpreßt, einer Oberflächenbehandlung unterworfen und ggf. zwischengelagert.

Die Verpackung der Aromaportionen 8 zusammen mit dem Produkt ist in Fig. 2 gezeigt. Diese erläutert, daß bei einer Station 9 Flaschen mit dem heißen Produkt befüllt werden, beispielsweise bei einer Temperatur von ca. 80°C. Bei einer Station 10 werden die Aromaportionen 8 in die vorher befüllten Flaschen eingegeben, und zwar ebenfalls bei dieser Temperatur von etwa 80°C. Anschließend werden die Flaschen in einer Station 11 verschlossen.

Jetzt erfolgt die Rückkühlung der befüllten Flaschen, entweder durch natürliche Abkühlung oder auch in einer Kühlstation 12. Die Flaschen kommen dann etwa auf Zimmertemperatur und können gelagert werden bzw. sie sind fertig zum Abverkauf.

## Patentansprüche

1. Verfahren zum Haltbarmachen von Aromen enthaltenden Lebensmitteln, insbesondere von Getränken, wobei das von dem Aroma getrennte Lebensmittel keimfrei gemacht und in einen Behälter abgefüllt wird, so daß das Lebensmittel mitsamt dem Behälter keimfrei ist, und das abgetrennte Aroma ohne wesentliche Erwärmung ebenfalls keimfrei gemacht,
gefroren, portioniert und mit einer ebenfalls keimfreien, gekühlten thermischen Isolierung ummantelt wird, die aus Bestandteilen des betreffenden Lebensmittels besteht, und daß das so gewonnene Aromastück in das immer noch keimfreie und in dem Behälter befindliche Lebensmittel eingegeben wird, worauf der Behälter verschlossen wird.

2. Verfahren nach Anspruch 1,
**dadurch gekennzeichnet**,
daß der verschlossene Behälter mitsamt dem Aromastück, der Isolierung und dem Lebensmittel gekühlt wird.

3. Verfahren nach Anspruch 2,
**dadurch gekennzeichnet**,
daß der verschlossene Behälter zwangsweise etwa auf Zimmertemperatur gekühlt wird.

4. Verfahren nach einem der Ansprüche 1 bis 3,
**dadurch gekennzeichnet**,
daß das von dem Aroma getrennte Lebensmittel durch Pasteurisieren oder Autoklavieren keimfrei gemacht wird.

## Claims

1. Process for preserving foodstuffs containing flavourings, and especially beverages, in which the foodstuff is separated from the flavouring, sterilized and introduced into a container, so that both it and the container are sterile, and the separated flavouring is also sterilized without any significant warming, then frozen, divided into portions and encased in an equally sterile thermal insulation layer made up of constituents of the foodstuff concerned, after which the flavouring portion thus obtained is added to the still sterile foodstuff in its container, which is then sealed.

2. Process according to Claim 1, characterized in that the sealed container is cooled together with the flavouring portion, insulating material and foodstuff.

3. Process according to Claim 2, characterized in that the sealed container is forcibly cooled approximately to room temperature.

4. Process according to one of Claims 1 to 3, characterized in that the foodstuff separated from the flavouring is sterilized by pasteurization or autoclaving.

## Revendications

1. Procédé de conservation de produits alimentaires, en particulier de boissons, contenant des arômes, le produit alimentaire séparé de l'arôme étant rendu stérile et rempli dans un récipient, si bien que le produit alimentaire est stérile avec le récipient, et l'arôme sépare étant également rendu stérile sans réchauffement essentiel, congelé, portionné et enrobé d'une isolation thermique refroidie, également stérile, qui est constituée par des parties constitutives du produit alimentaire concerné, et que le fragment d'arôme ainsi obtenu est introduit dans le produit alimentaire qui est encore stérile et qui se trouve dans le récipient, ce après quoi on ferme le récipient.

2. Procédé selon la revendication 1,
caractérisé en ce
que l'on refroidit le récipient fermé avec le fragment d'arôme, l'isolation et le produit alimentaire.

3. Procédé selon la revendication 2,
caractérisé en ce
que l'on refroidit obligatoirement le récipient fermé à peu près à la température ambiante.

4. Procédé selon l'une des revendications 1 à 3,
caractérisé en ce
que le produit alimentaire séparé de l'arôme est rendu stérile par pasteurisation ou par passage à l'autoclave.
